# EUROPÄISCHE PATENTSCHRIFT

(11) **EP 1 557 303 B1**
(45) Veröffentlichungstag und Bekanntmachung des Hinweises auf die Patenterteilung: **02.04.2008**
(21) Anmeldenummer: 04106472.6
(22) Anmeldetag: 10.12.2004
(51) Int. Cl.: B60G 11/27, B60G 17/015, F16F 9/05

(54) **Rollbalg-Luftfeder mit elektrischer Energie-Versorgung**
Rolling-lobe air spring with electrical power supply
Ressort pneumatique à soufflet roulant avec d'alimentation électrique

(30) Priorität: 24.01.2004 DE 102004003695
(43) Veröffentlichungstag der Anmeldung: 27.07.2005
(73) Patentinhaber: ContiTech Luftfedersysteme GmbH, 30165 Hannover (DE)
(72) Erfinder: Reck, Siegfried, 31582, Nienburg (DE); Bank, Christoph, 31275, Lehrte (DE)
(74) Vertreter: Finger, Karsten

(56) Entgegenhaltungen:
- EP-A- 1 459 817
- DE-A1- 10 130 507
- US-A- 4 141 236
- US-A- 4 923 057

## Beschreibung

Für das Betreiben elektrischer Systeme innerhalb einer Rollbalg-Luftfeder ist es erforderlich, elektrische Energie bereitzustellen.
Gemäß Anspruch 1 betrifft die Erfmdung die Versorgung einer Rollbalg-Luftfeder mit elektrischer Energie.

### Stand der Technik

1. Bisher muss die Energie zur Versorgung elektrischer Systeme von außen in die Luftfeder übertragen werden. Dabei richtet sich die Art der Energieübertragung nach dem mittleren Leistungsbedarf des zu versorgenden Systems. Für größere Leistungen werden elektrische Versorgungsleitungen benötigt. Dazu sind in der Regel zwei Leitungsadem erforderlich, die den Verkabelungsaufwand erhöhen.
2. Bei niedrigem Leistungsbedarf besteht die Möglichkeit, einen Energiespeicher (Batterie) mit geeigneter Lebensdauer in das zu versorgende System zu integrieren. Jedoch sind diese elektrochemischen Speicher häufig nicht für den geforderten Temperaturbereich geeignet.
3. Wenn das elektrische System nur sporadisch und/oder nur für kurze Zeit arbeiten soll, kann die erforderliche Energie über ein elektromagnetisches Feld eingekoppelt werden (Transponder). Ein wesentlicher Nachteil dieser Methode ist in dem Aufwand für die Koppelspulen auf der Sender- und der Empfängerseite zu sehen.

### Aufgabe der Erfindung

Die Aufgabe der vorliegenden Erfindung besteht in einer einfachen und praxis-tauglichen Versorgung insbesondere einer Rollbalg-Luftfeder mit elektrischer Energie.

### Lösung und Vorteile

Diese Aufgabe wird im Wesentlichen mit den Merkmalen des Hauptanspruchs gelöst. Durch die in den Unteransprüchen aufgeführten Maßnahmen sind bevorzugte Verbesserungen und Weiterbildungen möglich.

Erfindungsgemäß wird durch den Einsatz von piezoelektrischen Elementen in Luftfedern erstmals elektrische Energie zur Versorgung von Verbrauchern innerhalb der einzelnen Luftfedern bereitgestellt.

Die Verwendung von Piezo-Elementen zur Erzeugung von elektrischer Energie ermöglicht eine problemlose Versorgung diverser elektrischer Hilfsaggregate innerhalb einer Luftfeder. Dabei kann auf eine umständliche und damit aufwendige Verkabelung der einzelnen Luftfedern verzichtet werden. Zudem ist die erfindungsgemäße Methode der Vor-Ort-Stromversorgung weit weniger störanfällig als eine Verwendung von Transpondern.

Die Verwendung von piezoelektrischen Elementen in Luftfedern ist an sich bekannt. Insbesondere ist es bekannt, Piezoelemente in die Kolben-Oberfläche einer Rollbalg-Luftfeder zu integrieren. Gemäß der DE-PS 42 43 530 C2 dienen derartige Piezo-Elemente als Sensoren zur Bestimmung der momentanen Federhöhe, indem die Anpresskraft des auf der Kolbenoberfläche abrollenden Balgs mit Hilfe einer Reihe von auf der Kolbenoberfläche befindlichen Piezoelementen sensiert wird.

Ähnlich wie bei der Verwendung von Piezo-Elementen als Sensoren gemäß der gattungsgemäßen DE 101 30 507 A1 i.V.m. DE-PS 42 43 530 C2 zur Bestimmung der Federhöhe sind auch hier auf der Umfangsfläche des Abrollkolbens im variablen Abrollbereich des Rollbalgs Piezo-Elemente angeordnet.

Der Piezogenerator wird auf dem Abrollkolben mittig um die Stelle angeordnet, an der sich in Konstruktionslage des Fahrzeugs die Rollfalte der Luftfeder befindet. Bei den Federungsvorgängen überdeckt der Balg verschieden große Teile des Piezogenerators. Die dabei auftretenden mechanischen Spannungen in der Kontaktfläche zwischen der Balgwand und dem Generator verformen die Piezoelemente und verschieben darin elektrische Ladungen (piezoelektrischer Effekt). Diese Ladungstrennung ist die Quelle für die elektrische Energie.

Im Unterschied zu den vorbekannten Anordnungen sind die Piezo-Elemente nicht in axialer Erstreckung sondern vielmehr umfangsseitig im Bereich des Schwankungsbereichs der Rollfalte angeordnet. Auch dienen die Piezo-Elemente erfindungsgemäß nicht als Sensoren sondern (ausschließlich) zur Energiegewinnung zur Versorgung der vor Ort befindlichen Verbraucher.
Ähnlich wie bei der Verwendung als Sensoren kommen auch bei der erfindungsgemäßen Verwendung vorzugsweise Piezo-Keramiken und piezoelektrische Folien, z. B. aus Polyvinylidenfluorid (PVFD), (nicht hingegen Dehnungsmessstreifen) zum Einsatz.

Piezoelemente haben einen relativ hohen Innenwiderstand. Um die Leistung der elektrischen Energieversorgung zu erhöhen, werden gemäß einer Weiterbildung der Erfindung mehrere Piezo-Elemente zwecks Verringerung der Quellenimpedanz zueinander parallel geschaltet. Diese Piezo-Elemente können umfangsseitig nebeneinander angeordnet oder gestapelt werden.

Erfindungsgemäß nutzt der Piezogenerator die Kräfte, die während der Federbewegung zwischen der Balgwand und der Außenwand des Abrollkolbens auftreten. Aufgrund des Balgdrucks kommt es in der Kontaktfläche zu einer radial gerichteten Flächenpressung (F_{R}). Zusätzlich entstehen Schubspannungen in axialer Richtung (F_{Z}), wenn der Balg auf dem Kolben abrollt.

Eine weitere Möglichkeit zum Antrieb des Piezogenerators besteht darin, eine Piezofolie in die Balgwand einzubringen. Die dynamischen Umfangs- und Längsspannungen, die während des Abrollens in der Balgwand wirken, wirken auch in der Folie und verursachen darin infolge des piezoelektrischen Effekts die Ladungstrennung, die als Quelle elektrischer Energie genutzt werden kann.

Bei außengeführten Luftfedern besteht zusätzlich die Möglichkeit, einen Generatorgürtel mit Piezoelementen in die Außenführung einzuarbeiten.

Durch die Einbettung des mindestens einen Piezo-Elements in ein Elastomer ist die Energie-Quelle vor schädigenden Umwelteinflüssen (Schmutz usw.) dauerhaft geschützt.

Mit Hilfe des Generators kann elektrische Energie dort erzeugt werden, wo sie benötigt wird: in der Luftfeder. Die Energie wird dann erzeugt, wenn sie für die Durchführung von Messungen und die Übertragung von Messdaten benötigt wird: während des Fahrbetriebs.

### Zeichnungen

Im folgenden wird die erfindungsgemäße Energieversorgung anhand von vier Ausführungsbeispielen erläutert. Es zeigt:
Fig. 1 ein erstes und Fig. 2 ein zweites Ausführungsbeispiel, und zwar:
Fig. 1a und Fig. 2a jeweils eine Luftfeder im Längsschnitt,
Fig. 1b und Fig. 2b jeweils die Detailansicht X,
Fig. 1c und Fig. 2c jeweils den die Piezo-Elemente betreffenden Ausschnitt, und
Fig. 1d und Fig. 2d jeweils den Abrollkolben in perspektivischer Sicht.
Fig. 3 zeigt eine Rollbalg/Abrollkolben-Anordnung mit erfindungsgemäß in die Balgwand eingebrachter Piezofolie, in perspektivischer Sicht, und
Fig. 4 zeigt den Längsschnitt durch eine außengefährte Luftfeder, mit einem in die Außenführung eingearbeiteten Gürtel von Piezo-Elementen.

### Beschreibung

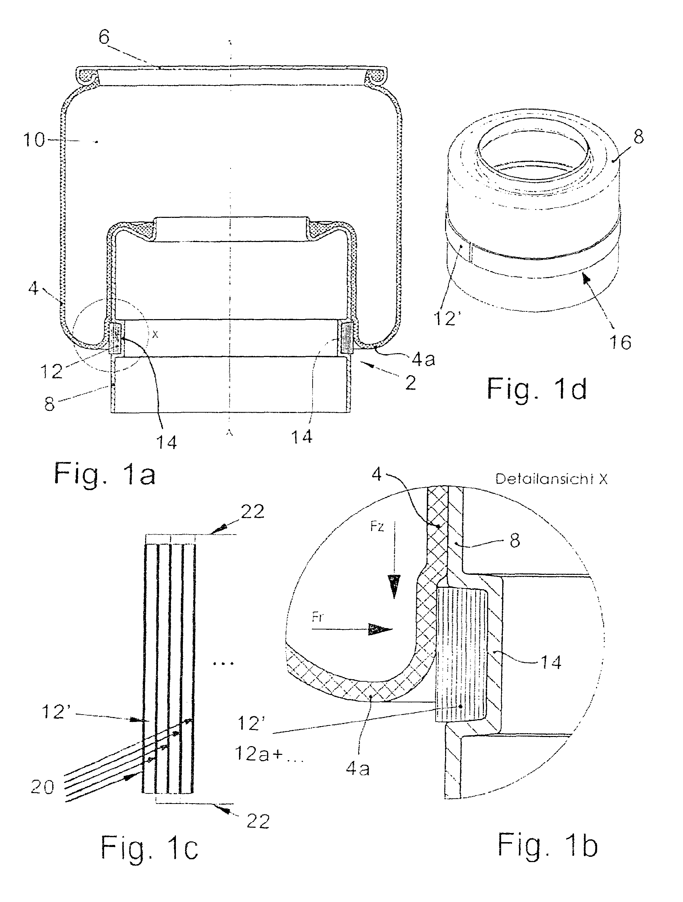

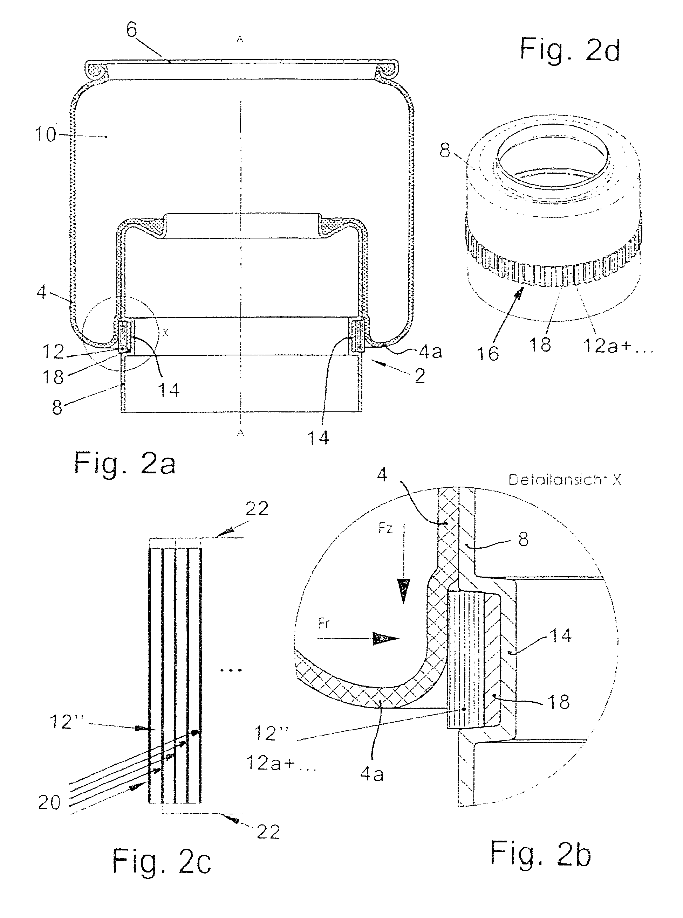

Die in Fig. 1a und Fig. 2a jeweils im Längsschnitt dargestellten Luftfedern 2 bestehen im Wesentlichen jeweils aus einem Rollbalg 4 und zwei abstandsvariabel zueinander angeordneten Endgliedern 6, 8, nämlich jeweils einer Abdeckplatte 6 und einem Abrollkolben 8, wobei der Rollbalg 4 und die Endglieder 6, 8 gemeinsam einen Luftfederinnenraum 10 umschließen. Bei mittlerer Federhöhe bzw. in Ruhelage der Feder 2 bedeckt der Rollbalg 4 den Abrollkolben 8 etwa zur Hälfte. Beim Ein- und Ausfedern wälzt sich die Rollfalte 4a des Rollbalgs 4 auf der Außenfläche des Kolbens 8 ab. Dabei erzeugt der mit Druckluft beaufschlagte Rollbalg 4 eine sich im momentanen Bereich der Rollfalte (4a) im Rhythmus des Ein- und Ausfederns ändernde Anpresskraft F auf den Kolben 8.

Diese auf den mittleren Bereich des Abrollkolbens 8 ausgeübte, sich aufgrund des Ein- und Ausfederns ändernde Anpresskraft F wird erfindungsgemäß mittels Piezo-Elementen 12 zur Erzeugung von elektrischer Energie zur Versorgung von Luftfeder-internen Verbrauchern ausgenutzt.

Zu diesem Zweck ist der Abrollkolben 8 in seinem mittleren Bereich mit einer umlaufenden Sicke 14 (vgl. jeweils "Detailansicht X") versehen, in die ein Paket von Piezo-Elementen 12a + ... eingefügt (eingelassen) ist ("Generator-Gürtel" 16).

Bei dem in der Fig. 1 dargestellten "Generator-Gürtel" 16 bilden die Piezo-Elementen 12a, ... einen Streifen übereinandergelegter flexibler Piezo-Folien 12', die in die umlaufende Sicke 14 gewickelt sind (Fig. 1d).

Gemäß Fig. 2 besteht der Genator-Gürtel 16 aus einer Reihe, auf einer Halterung 18 angebrachter piezo-keramischer Elemente 12", die in eine umlaufende Sicke 14 des Abrollkolbens 8 eingelassen sind (siehe insbesondere Fig. 2b und 2d).

Mit dem Abrollvorgang wird von der mit Luftdruck beaufschlagten Rollfalte 4a auf die in die Sicke 14 eingelassenen Piezo-Elemente 12 eine radiale F_{R}, aber auch eine axiale Kraft F_{Z} ausgeübt. Durch die Kompression der asymmetrisch-strukturierten Kristallgitter der Piezo-Elemente 12 ergibt sich eine Verschiebung der elektrischen Ladungsverteilung, was zur Folge hat, dass an jeweils zwei einander gegenüberliegend angeordneten FlächenElektroden 20 elektrische Ladungen und bei Druckschwankungen Ladungsänderungen, d. h. elektrischer Strom, über Anschlusskontakte 22 abgenommen werden können.

Um die zu gewinnende elektrische Leistung zu erhöhen, kommen jeweils ganze "Pakete" 12a + ... von Piezo-Elementen 12 zum Einsatz.

Da die elektrische Kapazität piezoelektrischer Elemente 12 trotz relativ großer Dielektrizitätszahl εᵣ recht gering ist, wird erfmdungsgemäß vorgeschlagen, die einzelnen Elemente 12a, ... der zu einem Paket gestapelten Piezo-Bausteine 12a, ... elektrisch parallel zu schalten. Auf diese Weise erhöht sich die Gesamt-Kapazität. Im gleichen Maße reduziert sich die Quellimpedanz, so dass ein größerer Strom zur Verfügung steht.

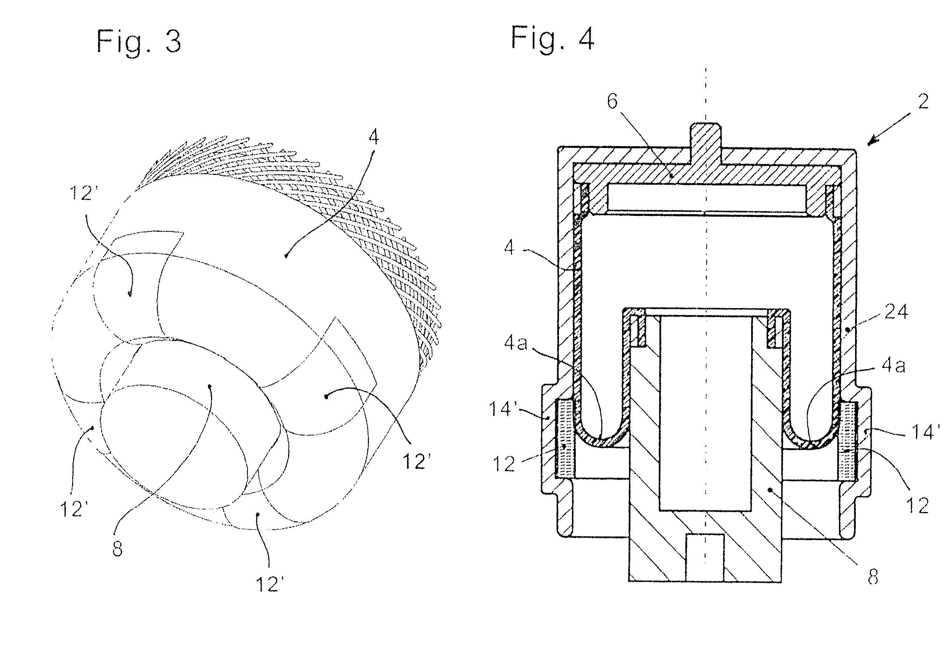

Während die Fig. Fig. 1 und 2 Ausführungsformen der Erfindung zeigen, bei denen Piezo-Elemente 12 in eine Sicke 14 des Abrollkolbens 8 eingelassen sind, zeigt die Fig. 3 ein weiteres Ausführungsbeispiel. Dabei sind Streifen von Piezo-Folie 12' in die Außenoberfläche eines Rollbalgs 4 eingelassen oder aufgeklebt. Und während die in Fig. 1 und 2 zum Einsatz gelangenden Piezo-Elemente 12 hauptsächlich als "Dickenschwinger" wirken, kann die in den Rollbalg gemäß Fig. 3 eingelassene Piezofolie 12' anlässlich des Abrollvorganges auf dem Kolben 8 sowohl als "Biegeschwinger" als auch als "Dickenschwinger" funktionieren.
Bei einer Verwendung als Biegeschwinger werden die radial inneren Piezo-Folien 12' auf Druck und die radial äußeren Piezo-Folien 12' auf Zug beansprucht. Dieser Sachverhalt ist beim Anschluss der Kontakte 22 zu berücksichtigen, falls sich die Folienpakete in der "neutralen" Ebene der Balgwand befmden..

Weist die Luftfeder 2 eine Außenführung ("Glocke") 24 auf, so besteht die Möglichkeit, anstelle einer in der Außenwand des Abrollkolbens 8 eingelassen und mit Piezo-Elementen 12 versehene Sicke 14 eine in der Innenoberfläche der Außenführung 24 eingelassene Sicke 14' mit Piezo-Elementen 12 auszustatten (Fig. 4). Dies ist immer dann sinnvoll, wenn sich ein Verbraucher im chassisfesten Bereich des Luftfederdeckels 6 befindet.

### Bezugszeichenliste

- 2: Rollbalg-Luftfeder, Luftfeder, Feder
- 4: Rollbalg
- 4a: Rollfalte
- 6, 8: Entglieder
- 6: Abdeckplatte, Luftfederdeckel
- 8: Abrollkolben, Kolben
- 10: Luftfeder-Innenraum
- 12, 12', 12": Piezo-Element, Piezo-Baustein
- 12a, ...: Piezo-Elemente, Paket von Piezo-Folien
- 12': Piezo-Folie, piezoelektrische Folie
- 12": piezo-keramisches Element
- F_{R}: radiale Kraft
- F_{Z}: axiale Kraft
- 14, 14': Sicke
- 16: "Generator-Gürtel"
- 18: Halterung
- 20: Flächen-Elektrode(n), Elektrode(n)
- 22: Anschlusskontakte
- 24: Außenführung, Mantel, "Glocke"

## Patentansprüche

1. Rollbalg-Luftfeder (2) mit
• einem Luftfederdeckel (6),
• einem Rollbalg (4), der eine Rollfalte (4a) aufweist, und
• einem Abrollkolben (8),
**dadurch gekennzeichnet,**
**dass** zur Erzeugung elektrischer Energie auf der Außenumfangsfläche des Abrollkolbens (8) im Abrollbereich des Rollbalgs (4) mehrere piezoelektrische Element (12, 12' und/oder 12") angeordnet und zueinander elektrisch parallel geschaltet sind.

2. Rollbalg-Luftfeder nach Anspruch 1,
**gekennzeichnet durch**
einen "Generator-Gürtel" (16), der aus piezokeramischen Elementen (12", ...) oder einem Paket aus Piezo-Folien (12', ...) aufgebaut (12a+ ...) und
auf dem Außenumfang des Abrollkolbens (8) in einer umlaufenden Sicke (14) eingelassen ist.

3. Rollbalg-Luftfeder nach einem der Ansprüche 1 bis 2,
**gekennzeichnet durch**
einen Mantel (24),
der umfangsseitig im Bereich des Abrollbereichs der Rollfalte (4a) mit einer mit Piezo-Elementen (12a ...) bestückten Sicke (14') versehen ist.

4. Rollbalg-Luftfeder nach einem der Ansprüche 1 bis 3,
**dadurch gekennzeichnet,**
**dass** der Rollbalg (4) im Abrollbereich der Rollfalte (4a) mit piezoelektrischer Folie (12') belegt ist.

5. Rollbalg-Luftfeder nach einem der Ansprüche 1 bis 4,
**dadurch gekennzeichnet,**
**dass** das mindestens ein Piezo-Element (12, 12' und/oder 12") auf einer Halterung (18) angebracht und/oder in ein Elastomer eingebettet ist.

## Claims

1. Rolling-lobe air spring (2) with
• an air-spring cover (6),
• a rolling lobe (4), which has a rolling convolution (4a), and
• a rolling piston (8)
**characterized in that**, to generate electrical power, a number of piezoelectric elements (12, 12' and/or 12'') are arranged on the outer circumferential surface of the rolling piston (8) in the rolling region of the rolling lobe (4) and are electrically connected in parallel with one another.

2. Rolling-lobe air spring according to Claim 1, **characterized by** a "generator belt" (16), which is made up of piezoceramic elements (12",...) or a pack of piezo coils (12',...) (12a + ...) and is recessed into the outer circumference of the rolling piston (8) in a peripheral bead (14).

3. Rolling-lobe air spring according to either of Claims 1 and 2, **characterized by** a casing (24), which is circumferentially provided in the region of the rolling region of the rolling convolution (4a) with a bead (14') fitted with piezo elements (12a...).

4. Rolling-lobe air spring according to one of Claims 1 to 3, **characterized in that** the rolling lobe (4) is covered with piezoelectric film (12') in the rolling region of the rolling convolution (4a).

5. Rolling-lobe air spring according to one of Claims 1 to 4, **characterized in that** at least one piezo element (12, 12' and/or 12'') is mounted on a holder (18) and/or embedded in an elastomer.

## Revendications

1. Amortisseur pneumatique à soufflet (2) comprenant un couvercle d'amortisseur pneumatique (6), un soufflet (4) qui présente un pli d'enroulement (4a) et un piston de déroulage (8), **caractérisé en ce que** plusieurs éléments piézoélectriques (12, 12' et ou 12'') sont disposés sur la surface de pourtour extérieur du piston de déroulage (8) dans la zone de déroulage du soufflet (4) et branchés électriquement en parallèle entre eux pour générer de l'énergie électrique.

2. Amortisseur pneumatique à soufflet selon la revendication 1, **caractérisé par** une « ceinture génératrice » (16) qui est composée (12a + ...) d'éléments piézocéramiques (12", ...) ou d'un paquet de films piézoélectriques (12', ...) et encastrée sur le pourtour extérieur du piston de déroulage (8) dans une moulure (14) périphérique.

3. Amortisseur pneumatique à soufflet selon l'une des revendications 1 à 2, **caractérisé par** une enveloppe (24) qui est munie sur son pourtour, dans la zone de déroulage du pli d'enroulement (4a), d'une moulure (14') garnie d'éléments piézoélectriques (12a, ...).

4. Amortisseur pneumatique à soufflet selon l'une des revendications 1 à 3, **caractérisé en ce que** le soufflet (4) est garni d'un film piézoélectrique (12') dans la zone de déroulage du pli d'enroulement (4a).

5. Amortisseur pneumatique à soufflet selon l'une des revendications 1 à 4, **caractérisé en ce qu'**au moins un élément piézoélectrique (12, 12' et/ou 12'') est monté sur un support (18) et/ou noyé dans un élastomère.
